(19) Europäisches Patentamt
European Patent Office
Office européen des brevets

(11) EP 1 642 502 B1

# (12) EUROPEAN PATENT SPECIFICATION

(45) Date of publication and mention of the grant of the patent:
**10.09.2014 Bulletin 2014/37**

(21) Application number: **03738609.1**

(22) Date of filing: **01.07.2003**

(51) Int Cl.:
***A01N 63/02*** (2006.01) ***A01N 25/30*** (2006.01)

(86) International application number:
**PCT/JP2003/008362**

(87) International publication number:
**WO 2005/002340 (13.01.2005 Gazette 2005/02)**

## (54) PESTICIDE OF ENVIRONMENTAL PRESERVATION TYPE

ÖKO- PESTIZID

PESTICIDE DE TYPE ECOLOGIQUE

(84) Designated Contracting States:
**AT BE BG CH CY CZ DE DK EE ES FI FR GB GR HU IE IT LI LU MC NL PT RO SE SI SK TR**

(43) Date of publication of application:
**05.04.2006 Bulletin 2006/14**

(73) Proprietors:
- **Mitsubishi Shoji Foodtech Co., Ltd.**
  **Chiyoda-ku**
  **Tokyo (JP)**
- **KYOYU AGRI CO., LTD.**
  **Kawasaki-shi**
  **Kanagawa 213-0002 (JP)**

(72) Inventors:
- **AKIYAMA, Hiroshi,**
  **YASHIMA CHEMICAL INDUSTRY CO LTD**
  **Nagano-shi,**
  **Nagano 381-0006 (JP)**
- **OTA, Yasuhiro,**
  **YASHIMA CHEMICAL INDUSTRY CO., LTD**
  **Nagano-shi, Nagano 381-0006 (JP)**
- **KAWAMOTO, Mutsuo,**
  **TOWA CHEMICAL INDUSTRY CO., LTD**
  **Chuo-ku, Tokyo 104-0028 (JP)**

(74) Representative: **Pontet Allano & Associes**
**Parc Les Algorithmes, Bâtiment Platon**
**CS 70003 Saint Aubin**
**91192 Gif sur Yvette Cedex (FR)**

(56) References cited:
**EP-B1- 0 929 219**
**WO-A1-02/069705**
**JP-A- 5 043 403**
**JP-A- 5 043 403**
**JP-A- 2001 131 011**
**JP-A- 2001 131 011**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

1. Technical field

The present invention relates to a pesticide characterized by alkyl glucosides blended in edible hydrogenated starch hydrolysate.

2. Background art

Currently known pesticides against organisms harmful to agricultural and horticultural products are mostly chemical compounds such as insecticide, miticide, fungicide, used each alone or in mixture to work so well, also in terms of cost effectiveness, to many types of harmful organisms. Such harmful organisms, however, easily acquire resistance against such chemical compound-derivatives pesticides, gradually reducing the effects of such pesticides.

On the other hand, biolytic pesticides are now in increasing demand to be used in agriculture and horticulture, due to recent growing environmental awareness among consumers seeking safe foods, agricultural and horticultural products. Such environmental awareness pesticide, safe to humans and animals, is described e.g. in Japanese Patent Publication (KOKAI) No. 07-126105 relating to a pesticide containing natural water-soluble high molecules like starch, seaweed extracts, botanical mucilages. Then, Japanese Patent Publications (KOKAI) No. 07-238003, No. 10-218703 and No. 2001-131011 describe pesticides containing sodium oleate, $\alpha$-hydroxy propyl starch, hydrogenated starch hydrolysate, respectively.

On the other hand, alkyl glucoside is commonly added as a surfactant to pesticides having crude agrochemicals as effective constituents. Japanese Patent Publication (KOKAI) No. 05-043403 refers to its effect to enhance the effect of biocide (crude agrochemical), Japanese Patent Publication (KOHYO) No. 2001-513530 refers to use as herbicide prepared together with agrochemical electrolyte such as Glyphosate, and Japanese Patent Publication (KOHYO) No. 09-500825 describes preparations of condensed oily emulsion preferably containing chemicals for agriculture.

Hydrogenated starch hydrolysate such as used in the present invention is found as an effective constituent in pesticide according to Japanese Patent Publication (KOKAI) No. 2001-131011. This shows no adverse effect in agriculture except for some possibility on petals of flowers in flower growing business where the appearance is important. Then, even if imposing very little on the environment only with the hydrogenated starch hydrolysate as an effective constituent, surfactants there used are those usually used in agrochemical preparations based on dialkyl sulfosuccinate, silicone, alkyl benzene sulfonic acid, to make pesticides that cannot be much less imposing on the environment.

On the other hand, alkyl glucoside is used as a surfactant in pesticides used together with chemically synthesized crude agrochemicals in all of Japanese Patent Publication (KOKAI) No. 05-043403, Japanese Patent Publication (KOHYO) No. 2001-513530 and Japanese Patent Publication (KOHYO) No. 09-500825. Pesticides with crude agrochemicals as effective constituents are not preferred in sales in general, due to their heavy environmental loads and concern about marketing such pesticide-residual products. Moreover, pesticides containing crude agrochemicals content are reportedly inviting the emergence of many drug-resistant harmful organisms at many places.

An object of the present invention is to offer pesticide, friendly to environment and safe to humans and animals, with alkyl glucoside in combined use, making full use of pesticides of environmental preservation type such as insecticides, miticides, fungicides of hydrogenated starch hydrolysate at lower concentrations and with higher infecting power without adverse effect to agricultural or horticultural products.

3. Disclosure of the present invention

To solve the above problems, the present inventors worked hard in different ways to find out pesticide containing edible hydrogenated starch hydrolysate and surfactant alkyl glucosides now used for household dishwashing detergent, cosmetics, etc. now receiving widespread attention to safety, hygiene, environment-friendliness, etc., to complete the present invention, on discovering the surprising advantage that the present pesticide, safer to environment, free from adverse effects to agricultural products and flowers, working to harmful organisms even better as pesticide per se than the conventional pesticides of environmental preservation type. The present pesticide makes a forming film to cover with liquid agent the whole body of harmful organisms including spiracles and all in order to kill the organisms with physical asphyxia or adheres to plant foliar surfaces and plant pathogens to inhibit the pathogens from proliferation, finally putting them to death.

The present invention relates, first, a pesticide characterized by the presence of hydrogenated starch hydrolysate as effective constituent and alkyl glucosides-derivatives surfactant blended there. The present invention relates, second, a pesticide containing of 0.005 to 20% surfactant of alkyl glucoside-derivatives as solid constituents by weight (hereinafter percentage means percentage by weight unless otherwise mentioned) according to the first present invention. Pesticide of the present invention can be sprayed in diluted or undiluted liquid by a motorized spreader or a hand sprayer over

harmful organisms in plant. To dilute with water and spray pesticide of the present invention, the concentration of alkyl glucoside in pesticide of the present invention should be adjusted to be 1 to 20% in solid, preferably be 1 to 10%, or more preferably 2 to 5%. The concentration of alkyl glucoside in diluted liquid to spray should preferably be adjusted to be 0.005 to 5.0% in solid usually, even though variable according to the circumstances and the types of adhering harmful organisms. Then, to spray undiluted pesticide of the present invention directly e.g. with a hand spray, the concentration of alkyl glucoside should be adjusted to be 0.005 to 5.0% in solid, preferably be 0.03 to 1.0% in sufficient quantity to wet the plant foliar surfaces.

Hydrogenated starch hydrolysate used in the present invention is manufactured by subjecting a saccharified liquid to catalytic reduction under hydrogen pressure by a method known per se, and the saccharified liquid is obtained by liquefying starch with α-amylase or acid, and then partially hydrolyzing it with enzyme such as β-amylase.

Hydrogenated starch hydrolysate used in the present invention can be e.g. those on the market for food or general use by trade names of hydrogenated starch hydrolysate or reduced maltose syrup advantageously e.g. PO-10 (trade mark), PO-20 (trade mark), PO-30 (trade mark), PO-40 (trade mark), Amalty Syrup (trade mark) produced by Towa Chemical Industry Co., Ltd. PO-10 is one of such hydrogenated starch hydrolysates advantageously used in the present invention, made from reduced dextrin having a dextrose equivalence of less than 12, in sugar composition roughly consisting of 0.1 to 2% sorbitol, 0.1 to 5% hydrogenated disaccharides, 0.15% hydrogenated trisaccharides, 50 to 80% hydrogenated saccharides having a polymerization degree of 20 or more and hydrogenated saccharides having a polymerization degree of 4 to 19 for the rest. Another hydrogenated starch hydrolysate advantageously adopted in the present invention, also called Amalty Syrup is obtained by reducing commercially available maltose syrup and has a sugar composition roughly consisting of 1 to 4% sorbitol, 75 to 80% hydrogenated disaccharides, 10 to 17% hydrogenated trisaccharides, 6 to 12% hydrogenated saccharides having a polymerization degree of 4 or more.

Alkyl glucoside used in the present invention may be obtained by reaction of alkanol and, glucose or its disaccharide or polysaccharide. The term "alkyl glucoside" as used in the present specification may comprehend alkyl monoglucoside as well as alkyl polyglucoside. Alkyl glucoside advantageously used in the present invention may be obtained by reaction of glucose and straight-chain or branched chain alkanol or with mixture of alkanol containing e.g. 4 to 20 or preferably 8 to 18 carbon atoms, e.g. 8 to 10 carbon atoms. The number of glucosyls per alkyl group in molecule can vary, and it can be alkyl mono- or di- or poly-glucose or saccharide derivatives. Alkyl polyglucoside now available on the market usually contains mixture of derivatives having an average number of glucosyls per alkyl group. Therefore, alkyl glucoside now commercially available has the following general formula (I):

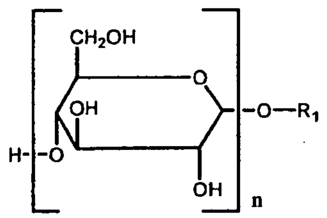

(in which n denotes the degree of polymerization usually in the range of 1 to 5 e.g. 1 to 3, $R_1$ represents branched chain or straight-chain alkyl group having 4 to 20 carbon atoms or mixture of alkyl groups having an average value within a predetermined range.)

Typical alkyl glucosides are available on the market e.g. by trade names of AGRIMUL PG2067 (produced by Cognis Corp) in which n is 1.7 at an average, $R_1$ represents mixture of octyl, decyl, AGRIMUL PG2076 (produced by Cognis Corp) in which n is 1.5 at an average, $R_1$ represents mixture of octyl, decyl, and SUCRARH AG-8 (produced by Nippon Fine Chemical Co., Ltd.) in which $R_1$ represents 2-ethyl-1-hexylglycoside, MYDOL 10 (produced by Kao Corporation) in which n is 1.35 at an average, $R_1$ represents mixture of nonyl, decyl, and undecyl, MYDOL 20 (produced by Kao Corporation) in which n is 1.35 at an average, $R_1$ represents mixture of decyl, dodecyl tetradecyl.

There is no particular restriction on additives in the present invention, permitting combined use of e.g. surfactant of alkyl benzene sulfonic acid-derivatives such as NEOPELEX F-65 (produced by KAO Corporation), surfactant of dialkyl sulfosuccinate-derivatives such as AIRROL CT-1 (produced by TOHO Chemical Industry Co., LTD.), NEOCOL SW-CP (produced by DAI-ICHI KOGYO SEIYAKU CO., LTD.), PELEX TR (produced by KAO Corporation), surfactant of acetylene glycol-derivatives such as SURFYNOL 420 (produced by Nissin Chemical Industry Co., Ltd.), and surfactant of silicone-derivatives such as Silwet L-77 (produced by Witco), Silwet L-408 (produced by Witco), KF-618 (produced by Shin-Etsu Chemical Co., Ltd.). Usually, additives are added 1 to 5.0% in pesticide to spray the pesticide of the present invention as diluted or can be added 0.01 to 1.0% in pesticide to spray the pesticide of the present invention as undiluted.

Pesticide of the present invention can be used usually in the form of liquid with alkyl surfactant of glucoside-derivatives, additives and water added to hydrogenated starch hydrolysate i.e. effective constituent, also adding and agitating a preparation assistant agent as needed. Otherwise, it can be dried, after adding and blending with it an extender

and preparation-assistant, to be used as dissolved or diluted with water, as water-soluble granule or wettable powder. To cite examples of preparation-assistants and extenders, it allows addition of mineral carrier, water-soluble carrier or antifreeze such as ethylene glycol, propylene glycol, glycerin, silicone-derivatives defoamer such as PRONAL EX-300 (produced by TOHO Chemical Industry Co., LTD.), antifungal such as PROXEL GXL (produced by Syngenta), dehydro sodium acetate (produced by TAISHO TECHNOS CO LTD.), pigments, perfumes as needed, also to prepare pesticides in the form of granules, water dispersible granule or liquid.

By the way, like hydrogenated starch hydrolysate i.e. effective constituent in pesticide of the present invention, also called "hydrogenated starch syrup" widely used for food, alkyl glucoside is also quite commonplace for shampoo, cosmetics, dishwashing liquid, etc., thanks to its safety, nontoxicity, biodegradation, low irritation, without any concern about handling or with less concern about environmental pollution. Pesticide of the present invention is thought to kill harmful organisms by choking them or restricting their moves, adhering better to them at lower concentrations than conventional hydrogenated starch hydrolysate preparations, thanks to films made by hydrogenated starch hydrolysate as effective constituent, reduction in surface tension caused by alkyl glucoside. Moreover, it is thought to show preventive and curative effects by adhering to plant foliar surfaces and plant pathogens to inhibit their proliferation, without causing pesticide-resistance of insects and plant pathogens. Pesticide of the present invention shows excellent effects to control harmful organisms, even when used alone, but can be more widely effective, if prepared in mixture with other pesticidal constituents such as insecticides, miticides, fungicides, etc.

Pesticide of the present invention can control spider mites such as *Tetranychus ulticae, Tetranychus kanzawai, Panonychus citri, Panonychus ulmi,* eriophyid mites, tarsonemid mites, aphids such as *Aphis gossypii, Myzus persicae,* whiteflies such as *Trialeurodes vaporariorum, Bemisia tabaci,* thrips such as *Frankliniella occidentalis, Thrips palmi, Scirtothrips dorsalis,* scales such as *Psudococcus comstocki,* emerging in fruit trees, vegetables, flowers. Moreover, it works also to prevent occurrence of powdery mildew in fruit trees, vegetables, flowers as well as rust in wheat, Welsh onion, etc. These insects and plant pathogens should be kept away e.g. from fruits such as tangerine, apple, pear, peach, Japanese plum, apricot, Japanese apricot, persimmon, grape, fig, mahaleb, vegetables such as cucumber, watermelon, melon, eggplant, tomato, green pepper, potato, strawberry, spinach, cabbage, napa, Brassica campestris, qing-geng-cai, parsley, etc., edible crops such as wheat, paddy rice, herbs, flowers such as rose, chrysanthemum, carnation, trees such as flowering cherry, camellia, tea plant.

4. Advantageous effects of the present invention

Pesticide of the present invention causes no concern about occurrence of pesticide-resistance, giving no adverse effect to agricultural and horticultural products, while working better to control insects and plant pathogens at lower concentrations than conventional. Moreover, it is pesticide of environmental preservation type with better safety for humans and animals as well as ecological friedliness.

5. Best modes of realization of the present invention

Pesticide of the present invention is not limited to but illustrated by the following examples in technical scope.

Hydrogenated starch hydrolysates used in the following examples are: PO-10 (produced by Towa Chemical Industry Co., Ltd.; solid concentration 100%), PO-20 (produced by Towa Chemical Industry Co., Ltd.; solid concentration 70%), PO-30 (produced by Towa Chemical Industry Co., Ltd.; solid concentration 70%), PO-40 (produced by Towa Chemical Industry Co., Ltd.; solid concentration 70%), using as reduced maltose starch syrup Amalty Syrup (produced by Towa Chemical Industry Co., Ltd.; solid concentration 75%). Surfactant of alkyl glucoside-derivatives there used are AGRIMUL PG2067 (produced by Cognis Corp), AGRIMUL PG2076 (produced by Cognis Corp), MYDOL 10 (produced by Kao Corporation), MYDOL 20 (produced by Kao Corporation), SUCRAPH AG-8 (produced by Nippon Fine Chemical Co., Ltd.). Other additives used there are NEOCOL SW-CP (surfactant of dialkyl sulfosuccinate-derivatives produced by DAI-ICHI KOGYO SEIYAKU CO., LTD.), NEWKALGEN EX-70 (surfactant of dialkyl sulfosuccinate-derivatives produced by Takemoto Oil & Fat Co., Ltd.), Silwet L-77 (surfactant of silicone-derivatives produced by Witco), SURFYNOL 420 (surfactant of acetylene glycol-derivatives produced by Nissin Chemical Industry Co., Ltd.), also with PRONAL EX-300 (produced by TOHO Chemical Industry) as defoamer as well as dehydro sodium acetate (produced by TAISHO TECHNOS CO LTD.) as antifungal.

<u>Preparation Example 1</u>

Hydrogenated starch hydrolysate PO-30 (solid concentration 70%) 85.72%, alkyl glucoside AGRIMUL PG2067 (solid concentration 70%) 1.42%, dehydro sodium acetate 0.10% and water 12.76% were agitated to prepare a liquid to obtain pesticide of present invention 1.

Preparation Example 2

Hydrogenated starch hydrolysate PO-30 (solid concentration 70%) 85.72%, alkyl glucoside AGRIMUL PG2067 (solid concentration 70%) 2.86%, dehydro sodium acetate 0.10% and water 11.32% were agitated to prepare a liquid to obtain pesticide of present invention 2.

Preparation Example 3

Hydrogenated starch hydrolysate PO-30 (solid concentration 70%) 85.72%, alkyl glucoside AGRIMUL PG2067 (solid concentration 70%) 4.29%, dehydro sodium acetate 0.10% and water 9.89% were agitated to prepare a liquid to obtain pesticide of present invention 3.

Preparation Example 4

Hydrogenated starch hydrolysate PO-30 (solid concentration 70%) 85.72%, alkyl glucoside AGRIMUL PG2067 (solid concentration 70%) 7.14%, dehydro sodium acetate 0.10% and water 7.04% were agitated to prepare a liquid to obtain pesticide of present invention 4.

Preparation Example 5

Hydrogenated starch hydrolysate PO-30 (solid concentration 70%) 85.72%, alkyl glucoside AGRIMUL PG2067 (solid concentration 70%) 11.43%, dehydro sodium acetate 0.10% and water 2.75% were agitated to prepare a liquid to obtain pesticide of present invention 5.

Preparation Example 6

Hydrogenated starch hydrolysate PO-10 (solid concentration 100%) 0.50%, alkyl glucoside AGRIMUL PG2067 (solid concentration 70%) 0.04%, dehydro sodium acetate 0.02%, PRONAL EX-300 0.01 %, and water 99.43% were agitated to prepare a liquid to obtain pesticide of present invention 6.

Preparation Example 7

Hydrogenated starch hydrolysate PO-20 (solid concentration 70%) 0.71%, alkyl glucoside AGRIMUL PG2076 (solid concentration 60%) 0.05%, dehydro sodium acetate 0.02%, PRONAL EX-300 0.01 %, and water 99.21% were agitated to prepare a liquid to obtain pesticide of present invention 7.

Preparation Example 8

Hydrogenated starch hydrolysate PO-30 (solid concentration 70%) 0.71%, alkyl glucoside MYDOL 10 (solid concentration 40%) 0.08%, dehydro sodium acetate 0.02%, PRONAL EX-300 0.01%, and water 99.18% were agitated to prepare a liquid to obtain pesticide of present invention 8.

Preparation Example 9

Hydrogenated starch hydrolysate PO-40 (solid concentration 70%) 0.71%, alkyl glucoside MYDOL 20 (solid concentration 40%) 0.08%, dehydro sodium acetate 0.02%, PRONAL EX-300 0.01%, and water 99.18% were agitated to prepare a liquid to obtain pesticide of present invention 9.

Preparation Example 10

Reduced maltose starch syrup Amalty Syrup (solid concentration 75%) 0.67%, alkyl glucoside SUCRAPH AG-8 (solid concentration 50%) 0.10%, dehydro sodium acetate 0.02%, PRONAL EX-300 0.01%, and water 99.20% were agitated to prepare a liquid to obtain pesticide of present invention 10.

Preparation Example 11

Hydrogenated starch hydrolysate PO-30 (solid concentration 70%) 0.71%, alkyl glucoside AGRIMUL PG2067 (solid concentration 70%) 0.10%, dehydro sodium acetate 0.02%, PRONAL EX-300 0.01%, and water 99.16% were

agitated to prepare a liquid to obtain pesticide of present invention 11.

Preparation Example 12

Hydrogenated starch hydrolysate PO-30 (solid concentration 70%) 0.71%, alkyl glucoside SUCRAPH AG-8 (solid concentration 50%) 0.10%, dehydro sodium acetate 0.02%, PRONAL EX-300 0.01 %, and water 99.16% were agitated to prepare a liquid to obtain pesticide of present invention 12.

Preparation Example 13

Hydrogenated starch hydrolysate PO-10 (solid concentration 100%) 60.00%, alkyl glucoside MYDOL 10 (solid concentration 40%) 8.00%, dehydro sodium acetate 0.20%, D-Sorbit 31.80% were mixed, dried to prepare a water-soluble agent to obtain pesticide of present invention 13.

Preparation Example 14

Hydrogenated starch hydrolysate PO-20 (solid concentration 70%) 86.00%, alkyl glucoside MYDOL 20 (solid concentration 40%) 8.00%, dehydro sodium acetate 0.20%, PRONAL EX-300 0.20%, and water 5.60% were agitated to prepare a liquid to obtain pesticide of present invention 14.

Preparation Example 15

Hydrogenated starch hydrolysate PO-30 (solid concentration 70%) 86.00%, alkyl glucoside SUCRAPH AG-8 (solid concentration 50%) 10.00%, dehydro sodium acetate 0.20%, PRONAL EX-300 0.10%, and water 3.70% were agitated to prepare a liquid to obtain pesticide of present invention 15.

Preparation Example 16

Hydrogenated starch hydrolysate PO-40 (solid concentration 70%) 71.40%, alkyl glucoside AGRIMUL PG2067 (solid concentration 70%) 7.00%, dehydro sodium acetate 0.20%, PRONAL EX-300 0.10%, and water 21.30% were agitated to prepare a liquid to obtain pesticide of present invention 16.

Preparation Example 17

Reduced maltose starch syrup Amalty Syrup (solid concentration 75%) 66.70%, alkyl glucoside AGRIMUL PG2076 (solid concentration 60%) 8.00%, dehydro sodium acetate 0.10%, PRONAL EX-300 0.10%, and water 25.10% were agitated to prepare a liquid to obtain pesticide of present invention 17.

Now, drugs for control are shown as comparison examples in the following.

Comparison Example 1

Saccharified reduced starch PO-30 (solid concentration 70%) 85.72%, NEOCOL SW-CP 3.00%, dehydro sodium acetate 0.10% and water 11.18% were agitated to prepare a liquid to obtain pesticide of comparative pesticide 1 (identical with Preparation Example 10 according to Japanese Patent Publication (KOKAI) No. 2001-131011).

Comparison Example 2

Hydrogenated starch hydrolysate PO-10 (solid concentration 100%) 60.00%, NEWKALGEN EX-70 3.00%, dehydro sodium acetate 0.10% and D-Sorbit 36.90% were added and mixed to prepare a water-soluble agent to obtain comparative pesticide 2 (identical with Preparation Example 11 according to Japanese Patent Publication (KOKAI) No. 2001-131011).

Comparison Example 3

Reduced maltose starch syrup Amalty Syrup (solid concentration 75%) 80.00%, NEOCOL SW-CP 3.00%, dehydro sodium acetate 0.10% and water 16.90% were added and agitated to prepare a liquid to obtain comparative pesticide 3 (identical with Preparation Example 12 according to Japanese Patent Publication (KOKAI) No. 2001-131011).

Comparison Example 4

Hydrogenated starch hydrolysate PO-30 (solid concentration 70%) 85.72%, Silwet L-77 3.00%, dehydro sodium acetate 0.10%, PRONAL EX-300 0.10%, and water 11.08% were added and agitated to prepare a liquid to obtain comparative pesticide 4.

Comparison Example 5

Hydrogenated starch hydrolysate PO-30 (solid concentration 70%) 85.72%, SURFYNOL420 3.00%, dehydro sodium acetate 0.10%, PRONAL EX-300 0.10%, and water 11.08% were added and agitated to prepare a liquid to obtain comparative pesticide 5.

Comparison Example 6

Alkyl glucoside AGRIMUL PG2067 (solid concentration 70%) 1.00%, dehydro sodium acetate 0.02%, PRONAL EX-300 0.01%, and water 98.97% were added and agitated to prepare a liquid to obtain comparative pesticide 6.
Now, it is shown by the following test examples how useful pesticides of the present invention are.

Test Example 1 (to test effects on larval *Myzus persicae)*

A piece of radish leaf sized as predetermined, hosting five females per leaf was inserted into a 20ml screw tube containing water to let them lay larvae in a constant temperature room (25°C) for 24 hours and to remove the adult females from the leaves to check the number of larvae. Then, the radish leaves were impregnated with liquids of present inventions 1 to 5 obtained in Preparation Examples 1 to 5 diluted with 100 parts of water (hereinafter weight/weight), undiluted liquid of present inventions 6 to 12 obtained in Preparation Examples 6 to 12, liquids of present inventions 13 to 17 obtained in Preparation Examples 13 to 17 diluted with 100 parts and 200 parts of water, liquids of comparative pesticides 1 to 5 obtained in Comparison Examples 1 to 5 diluted with 100 parts and 200 parts of water, undiluted liquid of comparative pesticide 6 obtained in Comparison Example 6, and ADION emulsifiable concentrate (produced by SUMITOMO CHEMICAL CO., LTD.) diluted with 1000 parts of water for 5 seconds as a control pesticide. Treated leaves were dried with wind and left still in a constant temperature room (25°C) to observe survival or death of larvae 48 hours later to calculate the mortality(%). Then, tests were carried out in three replicates per zone as shown in Table 1 here under.

Table 1

| | Dilution ratio | Compensated mortality (%) |
|---|---|---|
| Present invention 1 | 100 parts | 75.0 |
| Present invention 2 | 100 parts | 85.7 |
| Present invention 3 | 100 parts | 95.3 |
| Present invention 4 | 100 parts | 97.6 |
| Present invention 5 | 100 parts | 95.2 |
| Present invention 6 | undiluted | 91.3 |
| Present invention 7 | undiluted | 88.5 |
| Present invention 8 | undiluted | 86.7 |
| Present invention 9 | undiluted | 82.7 |
| Present invention 10 | undiluted | 95.5 |
| Present invention 11 | undiluted | 96.9 |
| Present invention 12 | undiluted | 94.8 |
| Present invention 13 | 100 parts | 89.7 |
| | 200 parts | 80.7 |
| Present invention 14 | 100 parts | 88.5 |
| | 200 parts | 79.8 |

(continued)

| | Dilution ratio | Compensated mortality (%) |
|---|---|---|
| Present invention 15 | 100 parts | 98.7 |
| | 200 parts | 90.2 |
| Present invention 16 | 100 parts | 89.4 |
| | 200 parts | 81.1 |
| Present invention 17 | 100 parts | 90.3 |
| | 200 parts | 81.5 |
| Comparative pesticide 1 | 100 parts | 93.8 |
| | 200 parts | 48.3 |
| Comparative pesticide 2 | 100 parts | 92.9 |
| | 200 parts | 43.2 |
| Comparative pesticide 3 | 100 parts | 90.3 |
| | 200 parts | 47.8 |
| Comparative pesticide 4 | 100 parts | 90.8 |
| | 200 parts | 40.1 |
| Comparative pesticide 5 | 100 parts | 90.6 |
| | 200 parts | 48.6 |
| Comparative pesticide 6 | undiluted | 6.9 |
| Control pesticide | 1000 parts | 100 |
| Untreated zone | - | 2.3 |

Test Example 2 (to test effects on *Macrosiphum euphorbiae*)

Potted *Petunia hybrida* (Solanaceae, Petunia) was used in this test. To arrange zones for the present invention, present inventions 14 and 15 obtained in Preparation Examples 14 and 15, diluted with 100 parts and 200 parts of water, were sprayed with atomizer over potted *Petunia hybrida* (in blossom) in sufficient quantity. Likewise, comparative pesticide 1 and 3 obtained in Comparison Examples 1 and 3, diluted with 100 parts and 200 parts of water, were sprayed with atomizer over potted *Petunia hybrida* (in blossom) in sufficient quantity. Likewise, MOSPILAN liquid (produced by NIPPON SODA CO., LTD.), diluted with 500 parts of water, were sprayed with atomizer over potted Petunia hybrida (in blossom) in sufficient quantity as a control pesticide. Moreover, a zone was left without any liquid spray as an untreated zone. In each zone, the number of *Macrosiphum euphorbiae* parasitic all over the plant was checked before spraying, 3, 7, 14 days later with the elapse of time (in 10 replicates per zone) as shown in Table 2 here below.

Table 2

| | Dilution ratio | Number of parasites per plant (average among 10 plants) | | | |
|---|---|---|---|---|---|
| | | Before spraying | 3 days later | 7 days later | 14 days later |
| Present invention 14 | 100 parts | 43.2 | 0.3 | 1.5 | 15.5 |
| | 200 parts | 39.7 | 0.5 | 3.8 | 12.6 |
| Present invention 15 | 100 parts | 44.5 | 0.3 | 2.1 | 10.5 |
| | 200 parts | 40.4 | 02 | 3.0 | 15.6 |
| Comparative pesticide 1 | 100 parts | 33.5 | 0.3 | 28 | 11.4 |
| | 200 parts | 39.6 | 12.5 | 30.4 | 55.5 |

(continued)

| | Dilution ratio | Number of parasites per plant (average among 10 plants) | | | |
|---|---|---|---|---|---|
| | | Before spraying | 3 days later | 7 days later | 14 days later |
| Comparative pesticide 3 | 100 parts | 35.8 | 0.3 | 28 | 11.4 |
| | 200 parts | 40.1 | 15.4 | 25.9 | 45.5 |
| Control pesticide | 500 parts | 41.6 | 0 | 0 | 0.3 |
| Untreated zone | - | 32.5 | 24.1 | 73.5 | 120.1 |

Test Example 3 (to test miticidal effects on adult females of resistant *Tetranychus urticae*)

To start with, haricot cultivated in a styrol cup having a diameter of 9cm (young stage) was inoculated with more or less than 30 head of resistant *Tetranychus urticae* to fixate mites. After fixation of mites, present inventions 13 to 17 obtained in Preparation Examples 13 to 17, diluted with 100 parts and 200 parts of water, for the present invention, and comparative pesticides 1 to 5 obtained in Comparison Examples 1 to 5, diluted with 200 parts of water, for comparison, were sprayed with an indoor automatic sprayer (produced by Ikeda Scientific Co., Ltd.) in quantity equivalent to 160L/10a. Likewise, DANITRON flowable (produced by Nihon Nohyaku Co., Ltd.), diluted with 1000 parts of water, was sprayed with an indoor automatic sprayer (produced by Ikeda Scientific Co., Ltd.) in quantity equivalent to 160L/10a as a control pesticide. Moreover, only water was sprayed over an untreated zone. Leaves in each zone were dried with wind and left still in a constant temperature room (25°C) to observe survival or death of mites 48 hours later to compute the mortality (%), in 3 replicates per zone, as shown in Table 3 here below.

Table 3

| | Dilution ratio | Compensated mortality (%) |
|---|---|---|
| Present invention 13 | 200 parts | 86.5 |
| Present invention 14 | 200 parts | 89.7 |
| Present invention 15 | 200 parts | 96.5 |
| Present invention 16 | 200 parts | 83.5 |
| Present invention 17 | 200 parts | 88.6 |
| Comparative pesticide 1 | 200 parts | 48.2 |
| Comparative pesticide 2 | 200 parts | 33.1 |
| Comparative pesticide 3 | 200 parts | 37.7 |
| Comparative pesticide 4 | 200 parts | 30.0 |
| Comparative pesticide 5 | 200 parts | 33.0 |
| Control pesticide | 1000 parts | 0 |
| Untreated zone | - | 3.3 |

Test Example 4 (to test miticidal effects on resistant *Panonychus citri*)

Potted Citrus unshiu (type ; Aoshima, 3 years old) was used in this test. Present inventions 13 to 17 obtained in Preparation Examples 13 to 17, diluted with 200 parts of water, for the present invention, were sprayed with atomizer over potted Citrus unshiu in sufficient quantity. On the other hand, comparative pesticide 1 obtained in Comparison Example 1, diluted with 100 parts and 200 parts of water, was sprayed with atomizer over potted Citrus unshiu in sufficient quantity for comparison. Likewise, DANI-CUT emusifiable concentrate (produced by Nissan Chemical Industries, LTD.), diluted with 1000 parts of water, was sprayed with atomizer over potted Citrus unshiu in sufficient quantity. Moreover, nothing was sprayed over an untreated zone. In each zone, adult females of resistant *Panonychus citri* parasitic over 20 leaves per tree were counted, before spraying and 3, 7, 14 days later with the elapse of time (in two replicates per pot per zone), to obtain the results (calculated by 100 leaves), as shown in Table 4 here below.

Table 4

| | Dilution ratio | Adult females of resistant *Panonychus citri* / 100 leaves | | | |
|---|---|---|---|---|---|
| | | Before spraying | 3 days later | 7 days later | 14 days later |
| Present invention 13 | 200 parts | 98 | 4 | 7 | 14 |
| Present invention 14 | 200 parts | 97 | 5 | 3 | 11 |
| Present invention 15 | 200 parts | 70 | 0 | 3 | 10 |
| Present invention 16 | 200 parts | 65 | 8 | 7 | 16 |
| Present invention 17 | 200 parts | 65 | 0 | 3 | 15 |
| Comparative pesticide 1 | 100 parts | 52 | 0 | 4 | 14 |
| | 200 parts | 76 | 40 | 59 | 81 |
| Control pesticide | 1000 parts | 76 | 35 | 39 | 125 |
| Untreated zone | - | 66 | 87 | 117 | 248 |

Test Example 5 (to test effect on cucumber powdery mildew)

Powdery mildew-free potted cucumber (Type : Tokiwa Hikari No.3, P) cultivated in an unheated acryl house, was used in this test. Present inventions 8 to 13 obtained in Preparation Examples 8 to 13, diluted with 200 parts of water, for the present invention, were sprayed with a hand sprayer over potted cucumber in sufficient quantity. On the other hand, comparative pesticide 1 obtained in Comparison Example 1, diluted with 200 parts of water, for comparison, was sprayed with a hand sprayer over potted cucumber in sufficient quantity. Likewise, HarmoMate water-soluble granule (produced by MEIJI SEIKA KAISHA, LTD.), diluted with 800 parts of water, as control pesticide, was sprayed with a hand sprayer over potted cucumber in sufficient quantity. In each zone, spontaneous occurrence rate of powdery mildew on lowermost two leaves per plant was studied 12 days later than spraying (6 plants per zone). Then, disease occurrence rates and pesticidal values were calculated by the following formula.

・Disease occurrence rate = [Σ ((occurrence index) x (disease degree per number of leaves)) / (4 x (number of checked leaves))] x 100

The occurrence index here is shown as follows.

0: No occurrence
1: Less than 5% per area of affected leaf
2: 5 to less than 25% per area of affected leaf
3: 25 to less than 50% per area of affected leaf
4: 50% or more per area of affected leaf

・Pesticidal value = [((Occurrence rate in untreated zone) – (Occurrence rate in treated zones)) / Occurrence rate in untreated zone] x 100

The results observed 12 days later are shown in Table 5 here below.

Table 5

| | Dilution ratio | Occurrence rate | Pesticidal value |
|---|---|---|---|
| Present invention 8 | 200 parts | 20.4 | 76.5 |
| Present invention 9 | 200 parts | 20.6 | 76.2 |

(continued)

| | Dilution ratio | Occurrence rate | Pesticidal value |
|---|---|---|---|
| Present invention 10 | 200 parts | 22.0 | 74.6 |
| Present invention 11 | 200 parts | 21.3 | 75.4 |
| Present invention 12 | 200 parts | 22.5 | 74.0 |
| Present invention 13 | 200 parts | 23.0 | 73.5 |
| Comparative pesticide 1 | 200 parts | 43.6 | 49.7 |
| Control pesticide | 800 parts | 27.0 | 68.9 |
| Untreated zone | - | 86.7 | - |

Test Example 6 (to test adverse effects)

Present inventions 14 and 15 obtained in Preparation Examples 14 and 15, diluted with 100 parts of water, were sprayed with atomizer in sufficient quantity over potted cucumber (Hikari No.3, P: mature), haricot (Nagauzura: mature), tomato (Large size Fukuju: mature), Citrus unshiu (Aoshima: 4 years old), apple (Fuji: 4 years old), tea (Yabukita: 3 years old), wheat (Norin No.61: two leaves), paddy rice (Koshihikari: 2.5 leaves), Solanaceae Petunia (Petunia hybrida in blossom), Compositae Leucanthemum (North Pole: in blossom), Violaceae Viola (Viola x wittrockiana: in blossom). Likewise, comparative pesticides 1 and 3 obtained in Comparison Examples 1 and 3, diluted with 100 parts of water, were sprayed with atomizer in sufficient quantity. In each zone, foliages and fruits were checked with eye three days later than spraying, while checking foliages and flowers of Solanaceae Petunia (Petunia hybrida), Compositae Leucanthemum (North Pole), Violaceae Viola (Viola x wittrockiana), with the results as shown in Table 6.

Table 6

| | Brand | Adverse effects (on foliages / fruits or flowers) | | | |
|---|---|---|---|---|---|
| | | Present invention 14 | Present invention 15 | Comparative pesticide 1 | Comparative pesticide 3 |
| Cucumber | Hikari No.3, P | -/- | -/- | -/- | -/- |
| Haricot | Nagauzura | -/- | -/- | -/- | -/- |
| Tomato | Large size Fukuju | -/- | -/- | -/- | -/- |
| Citrus unshiu | Aoshima | -/- | -/- | -/- | -/- |
| apple | Fuji | -/- | -/- | -/- | -/- |
| tea | Yabukita | -/- | -/- | -/- | -/- |
| wheat | Norin No.61 | -/- | -/- | -/- | -/- |
| paddyrice | Koshihikari | -/- | -/- | -/- | -/- |
| Solanaceae Petunia | Petunia hybrida | -/- | -/- | -/+ | -/+ |
| Compositae Leucanthemum | North Pole | -/- | -/- | -/+ | -/+ |
| Violaceae Viola | Viola x wittrockiana | -/- | -/- | -/+ | -/+ |

The adverse effects were judged in degree according to the following criteria.

-: No adverse effect

-+: Small adverse effects causing no problems in practical use

+: Some adverse effects causing problems in practical use

## Claims

1. Pesticide **characterized in** the presence of hydrogenated starch hydrolysate as effective constituent and blended surfactant of alkyl glucoside-derivatives.

2. Pesticide of claim 1 containing surfactant of alkyl glucoside-derivatives at solid concentrations of 0.005 to 20% by weight.

## Patentansprüche

1. Pestizid **dadurch gekennzeichnet, dass** als aktive Komponente, hydrierten Stärkehydrolysat enthaltet ist und Alkylglucosid Derivate oberflächenaktive Mittel vermischt sind.

2. Pestizid nach Anspruch 1 bestehend Alkylglucosid Derivate oberflächenaktive Mittel zu einer Feststoffkonzentration von 0,005 bis 20 Gew.%.

## Revendications

1. Pesticide **caractérisé par** la présence d'un hydrolysat d'amidon hydrogéné comme constituant actif mélangé à des tensioactifs à base de dérivés d'alkylglucosides.

2. Pesticide selon la revendication 1 contenant des tensioactifs à base de dérivés d'alkylglucosides à une concentration en solide de 0,005 à 20 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7126105 A
- JP 7238003 A
- JP 10218703 A
- JP 2001131011 A
- JP 5043403 A
- JP 2001513530 A
- JP 9500825 A